(19) Europäisches Patentamt
European Patent Office
Office européen des brevets

(11) Veröffentlichungsnummer: **0 164 634**
**A1**

(12) # EUROPÄISCHE PATENTANMELDUNG

(21) Anmeldenummer: **85106508.6**

(22) Anmeldetag: **28.05.85**

(51) Int. Cl.[4]: **C 07 F 7/10**
A 01 N 55/00

(30) Priorität: **09.06.84 DE 3421649**

(43) Veröffentlichungstag der Anmeldung:
**18.12.85 Patentblatt 85/51**

(84) Benannte Vertragsstaaten:
**CH DE FR GB IT LI**

(71) Anmelder: **BAYER AG**
**Konzernverwaltung RP Patentabteilung**
**D-5090 Leverkusen 1 Bayerwerk(DE)**

(72) Erfinder: **Fauss, Rudolf, Dr.**
**Gerstenkamp 10**
**D-5000 Koeln 80(DE)**

(72) Erfinder: **Findeisen, Kurt, Dr.**
**In der Follmühle 10**
**D-5068 Odenthal 2(DE)**

(72) Erfinder: **Müller, Klaus-Helmut, Dr.**
**Bockhackstrasse 55**
**D-4000 Düsseldorf 13(DE)**

(72) Erfinder: **Schmidt, Robert R. Dr.**
**Im Waldwinkel 110**
**D-5060 Bergisch Gladbach 2(DE)**

(72) Erfinder: **Eue, Ludwig, Dr.**
**Paul-Klee-Strasse 36**
**D-5090 Leverkusen 1(DE)**

(72) Erfinder: **Santel, Hans-Joachim, Dr.**
**Gerstenkamp 19**
**D-5000 Koeln 80(DE)**

(54) **Mono- und Bistrimethylsilylamino-triazinone.**

(57) Die Erfindung betrifft neue Mono- und Bistrimethylsilylamino-triazinone der allgemeinen Formeln

$A-NH-Si(CH_3)_3$ bzw. $A-N(Si(CH_3)_3)_2$

worin

A für die Triazinon-Reste der Formeln

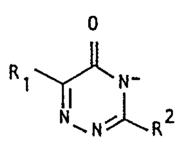

und

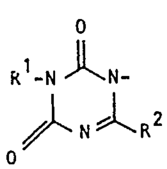

steht, in welchen jeweils

$R^1$ für jeweils gegebenenfalls substituiertes Alkyl, Cycloalkyl oder Aryl steht und

$R^2$ für Alkyl, Alkylthio, Alkylamino oder Dialkylamino steht.

Verfahren zu ihrer Herstellung durch Silylierung der entsprechenden Amino-triazinone ($A-NH_2$) sowie ihre Verwendung als Herbizide. Die Verbindungen der Formel $A-NH-Si(CH_3)_3$ können außerdem durch weitere Silylierung in die Verbindung der Formel $A-N(Si(CH_3)_3)_2$ überführt werden.

EP 0 164 634 A1

BAYER AKTIENGESELLSCHAFT
Konzernverwaltung RP
Patentabteilung

5090 Leverkusen, Bayerwerk

Bi/ABc
IVb

Mono- und Bistrimethylsilylamino-triazinone

Die Erfindung betrifft neuartige Mono- und Bistrimethylsilylamino-triazinone, und zwar 3,6-disubstituierte 4-(Mono- und -Bistrimethylsilylamino)-1,2,4-triazin-5-(4H)-one und 3,6-disubstituierte 1-(Mono- und -Bistrimethylsilylamino)-1,3,5-triazin-2,4(1H, 3H)-dione, erfinderische Verfahren zu ihrer Herstellung und ihre Verwendung als Herbizide.

Es ist bereits bekannt geworden, daß bestimmte 4-Amino-1,2,4-triazin-5(4H)-one und 1-Amino-1,3,5-triazin-2,4-(1H, 3H)-dione als Herbizide eingesetzt werden können. Als besonders wirksame Verbindungen aus dieser Herbizidgruppe seien die folgenden bekannten Wirkstoffe genannt:

4-Amino-3-methyl-6-phenyl-1,2,4-triazin-5(4H)on, (Metamitron), 4-Amino-3-methylthio-6-tert.-butyl-1,2,4-triazin-5(4H)-on, (Metribuzin) und 1-Amino-3-neopentyl-6-ethylthio-1,3,5-triazin-2,4-(1H, 3H)-dion (Ametridione)

(vgl. z.B. R. Wegler, Chemie der Pflanzenschutz- und Schädlingsbekämpfungsmittel, Band 5 "Herbizide", Seiten 352-357 (1977); ferner DE-PS'en 15 42 873, 17 95 784, 21 07 757, 22 24 161, 22 54 200 und US-PS'en 3 671 523; 3 961 936; 3 847 914; 4 056 527).

Die vorgenannten Wirkstoffe sind jedoch in ihrer Wirkung nicht immer ausreichend gut und schnell. Bei Metamitron ist z.B. die anfängliche Wirkung bei einer Nachauflaufanwendung nicht ausreichend.

Es wurde jetzt überraschend gefunden, daß man - ausgehend von den bekannten Amino-triazinonen - die entsprechenden Bistrimethylsilylamino-triazinone der allgemeinen Formel (I)

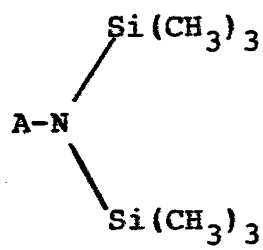

(I)

worin A für die Triazinon-Reste der Formeln

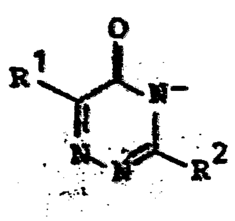

und

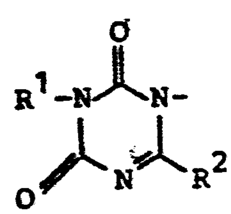

steht, in welchen jeweils

$R^1$ für jeweils gegebenenfalls substituiertes Alkyl, Cycloalkyl oder Aryl steht und

$R^2$ für Alkyl, Alkylthio, Alkylamino oder Dialkylamino steht,

mit guten Ausbeuten durch direkte Silylierung herstellen kann, ferner daß die neuartigen Bistrimethylsilylamino-triazinone der Formel (I) ebenso wie die nichtsilylierten Aminotriazinone starke herbizide Wirkungen aufweisen und daß die erfindungsgemäßen N,N-bis-silylierten Verbindungen in der Regel erheblich schneller wirken als die entsprechenden nichtsilylierten Amino-triazinone.

Ein Gegenstand der Erfindung sind somit die neuen Bistrimethylsilylamino-triazinone der allgemeinen Formel (I), das neue Verfahren zu ihrer Herstellung und ihre Verwendung als Herbizide.

Das erfindungsgemäße Verfahren zur Herstellung der Bistrimethylsilylamino-triazinone der obigen allgemeinen Formel (I) ist dadurch gekennzeichnet, daß man Aminotriazinone der allgemeinen Formel (II)

$$A\text{-}NH_2 \qquad (II)$$

worin A für die Triazinon-Reste der Formeln

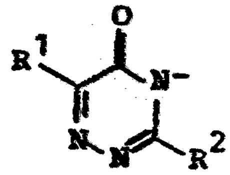

und

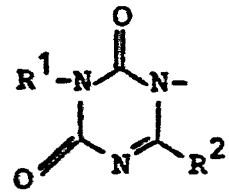

steht, in welchen jeweils

$R^1$ für jeweils gegebenenfalls substituiertes Alkyl, Cycloalkyl oder Aryl steht und

$R^2$ für Alkyl, Alkylthio, Alkylamino oder Dialkylamino steht,

mit Trimethylsilylcyanid ($(CH_3)_3Si-CN$) bei Temperaturen zwischen 100°C und 220°C, gegebenenfalls in Gegenwart eines sauren oder basischen Katalysators, gegebenenfalls in Gegenwart eines Verdünnungsmittels und gegebenenfalls unter Druck, umsetzt.

Es muß als ausgesprochen überraschend angesehen werden, daß die Silylierung der Amino-triazinone mit Trimethylsilylcyanid überhaupt gelingt, da mit den sonst technisch üblichen Silylierungsmitteln wie Trimethylsilylchlorid oder Hexamethylendisilazan nach eigenen Untersuchungen überhaupt kein Umsatz beobachtet werden kann. Allenfalls war nur Monosilylierung zu erwarten, wie sie - ebenfalls nach eigenen Untersuchungen - beispielsweise bei der Silylierung von aromatischen Aminen wie Anilin eintritt.

Da Si-N-Bindungen als äußerst hydrolyseempfindlich bekannt sind (vgl. z.B. "Organosilicon Compounds", Vol. 1, Seiten 76 und 85, Academic Press New York und London,

1965), war zu erwarten, daß die erfindungsgemäßen Bistrimethylsilylamino-triazinone in Wasser leicht unter Bildung der Ausgangsverbindungen (d.h. der nichtsilylierten Aminotriazinone) hydrolysieren. Dies ist jedoch nicht der Fall: die Bistrimethylsilylamino-triazinone sind überraschenderweise in Wasser sehr hydrolysestabil.

Die Silylierung mit Trimethylsilylcyanid verläuft sehr einfach: es müssen nur beide Reaktionspartner zusammen erhitzt werden. Der Zusatz einer Hilfsbase, wie es beispielsweise bei Silylierungen mit Trimethylsilylchlorid dem Stand der Technik entspricht, ist beim erfindungsgemäßen Verfahren überflüssig.

Ein weiterer Vorteil der Erfindung ist darin zu sehen, daß die neuen Silylverbindungen der Formel (I) bei gleicher Aufwandmenge eine höhere herbizide Wirkung als die benannten herbizid-wirksamen Ausgangsverbindungen der Formel (II) besitzen. Wird dabei noch berücksichtigt, daß die herbizid-wirksame Ausgangsverbindung durch die Bissilylierung - infolge Erhöhung des Molekulargewichtes um 144 Einheiten - noch "verdünnt" wird, so wird die mit dem Bis-silylderivat erreichte Wirkungssteigerung deutlich ersichtlich. Der Eintritt einer solchen Wirkungssteigerung muß als ausgesprochen überraschend betrachtet werden, da durch das "Verdünnen" eher mit einem Wirkungsabfall zu rechnen war.

Verwendet man 4-Amino-3-methyl-6-phenyl-1,2,4-triazin-5(4H)on als Ausgangsstoff für die erfindungsgemäße Umsetzung mit Trimethylsilylcyanid, so kann der Reaktionsablauf durch das folgende Formelschema wiedergegeben werden:

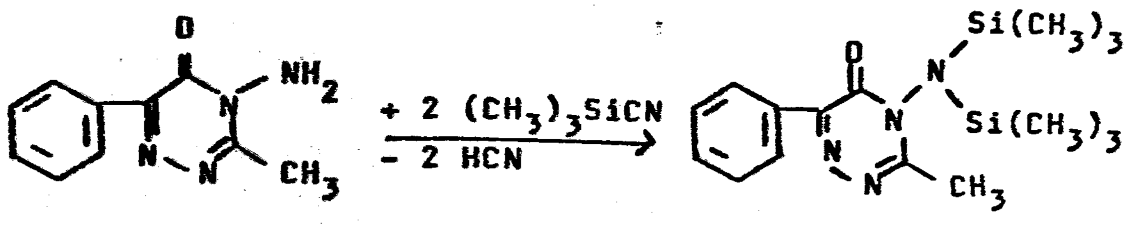


Das als Silylierungsmittel eingesetzte Trimethylsilylcyanid $[(CH_3)_3Si-CN]$ ist bekannt und kann in einfacher Weise aus Trimethylsilylchlorid und Natriumcyanid hergestellt werden (vgl. DE-OS 30 18 821, EP-PS 0 040 356 oder US-PS 4 328 351 und dort zitierte Literatur).

Die als Ausgangsverbindungen verwendeten Amino-triazinone der allgemeinen Formel (II) sind ebenfalls bekannt und ihre Herstellung ist beschrieben (vgl. z.B. die oben genannten Patentschriften DE-PS 17 95 784, 21 07 757, US 3 671 523, 3 847 914 sowie DK-PS 136 067).

Bevorzugte Verbindungen der Formeln (I) bzw. (II) sind solche, bei welchen

$R^1$ für jeweils gegebenenfalls durch Halogen substituiertes Alkyl mit 1-8 C-Atomen, Cycloalkyl mit 3-8 C-Atomen oder Phenyl steht und

$R^2$ für jeweils gegebenenfalls durch Halogen substituiertes Alkyl mit 1-2 C-Atomen, Alkylthio mit 1-2 C-Atomen, Alkylamino mit 1-2 C-Atomen oder Dialkylamino mit 1-2 C-Atomen in jeder Alkylgruppe steht,

wobei bevorzugte Halogenatome jeweils Fluor, Chlor und Brom sind.

Als besonders bevorzugte Substituenten $R^1$ und $R^2$ in den Verbindungen (I) bzw. (II) seien die folgenden Reste genannt:

Für $R^1$: Methyl, Ethyl, Propyl, iso-Propyl, sec.-Butyl, iso-Butyl, tert.-Butyl und Neopentyl; Cyclopropyl, 1-Methylcyclopropyl, Cyclopentyl und Cyclohexyl;
Phenyl, 2-Chlorphenyl, 3-Chlorphenyl, 4-Chlorphenyl, 2-Fluorphenyl, 3-Fluorphenyl und 4-Fluorphenyl;

für $R^2$: Methyl, Ethyl, iso-Propyl, Chlormethyl, Dichlormethyl, Trichlormethyl, Fluormethyl, Difluormethyl, Trifluormethyl, 1-Fluorethyl, Pentafluorethyl; Methylthio, Trichlormethylthio, Trifluormethylthio, Ethylthio; Methylamino, Dimethylamino, Ethylamino und Diethylamino.

Im einzelnen seien folgende Verbindungen der allgemeinen Formeln (Ia) bzw. (Ib) beispielhaft genannt:

Tabelle 1

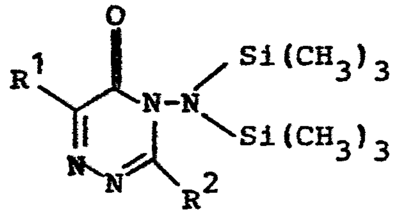

(Ia)

| $R^1$ | $R^2$ |
|---|---|
| $(CH_3)_2CH-$ | $-CH_3$ |
| $(CH_3)_2CH-$ | $-C_2H_5$ |
| $(CH_3)_2CH-$ | $-CH(CH_3)_2$ |
| $(CH_3)_2CH-$ | $-SCH_3$ |
| $(CH_3)_2CH-$ | $-SC_2H_5$ |
| $(CH_3)_2CH-$ | $-NHCH_3$ |
| $(CH_3)_2CH-$ | $-N(CH_3)_2$ |
| $C_2H_5-CH(CH_3)-$ | $-CH_3$ |
| $C_2H_5-CH(CH_3)-$ | $-C_2H_5$ |
| $C_2H_5-CH(CH_3)-$ | $-CH(CH_3)_2$ |
| $C_2H_5-CH(CH_3)-$ | $-SCH_3$ |
| $C_2H_5-CH(CH_3)-$ | $-SC_2H_5$ |
| $C_2H_5-CH(CH_3)-$ | $-NHCH_3$ |
| $C_2H_5-CH(CH_3)-$ | $-N(CH_3)_2$ |
| $(CH_3)_2CH-CH_2-$ | $-CH_3$ |
| $(CH_3)_2CH-CH_2-$ | $-C_2H_5$ |
| $(CH_3)_2CH-CH_2-$ | $-CH(CH_3)_2$ |

Tabelle 1 (Fortsetzung)

| $R^1$ | $R^2$ |
|---|---|
| $(CH_3)_2CH-CH_2-$ | $-SCH_3$ |
| $(CH_3)_2CH-CH_2-$ | $-SC_2H_5$ |
| $(CH_3)_2CH-CH_2-$ | $-NHCH_3$ |
| $(CH_3)_2CH-CH_2-$ | $-N(CH_3)_2$ |
| $(CH_3)_3C-$ | $-CH_3$ |
| $(CH_3)_3C-$ | $-C_2H_5$ |
| $(CH_3)_3C-$ | $-CH(CH_3)_2$ |
| $(CH_3)_3C-$ | $-SCH_3$ |
| $(CH_3)_3C-$ | $-SC_2H_5$ |
| $(CH_3)_3C-$ | $-NHCH_3$ |
| $(CH_3)_3C-$ | $-N(CH_3)_2$ |
| $(CH_3)_3C-CH_2-$ | $-CH_3$ |
| $(CH_3)_3C-CH_2-$ | $-C_2H_5$ |
| $(CH_3)_3C-CH_2-$ | $-CH(CH_3)_2$ |
| $(CH_3)_3C-CH_2-$ | $-SCH_3$ |
| $(CH_3)_3C-CH_2-$ | $-SC_2H_5$ |
| $(CH_3)_3C-CH_2-$ | $-NHCH_3$ |
| $(CH_3)_3C-CH_2-$ | $-N(CH_3)_2$ |
| 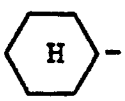 | $-CH_3$ |
| 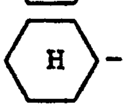 | $-C_2H_5$ |
| 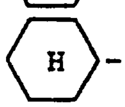 | $-CH(CH_3)_2$ |
| 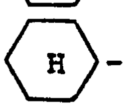 | $-SCH_3$ |

Tabelle 1 (Fortsetzung)

| $R^1$ | $R^2$ |
|---|---|
| 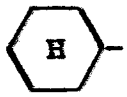 | $-SC_2H_5$ |
| 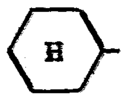 | $-NHCH_3$ |
| 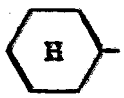 | $-N(CH_3)_2$ |
| 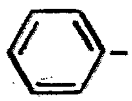 | $-CH_3$ |
| 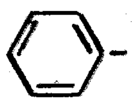 | $-C_2H_5$ |
| 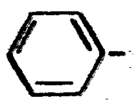 | $-CH(CH_3)_2$ |
| 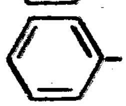 | $-SCH_3$ |
| 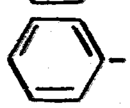 | $-SC_2H_5$ |
| 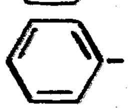 | $-NHCH_3$ |
| 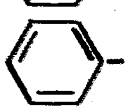 | $-N(CH_3)_2$ |

Tabelle 2

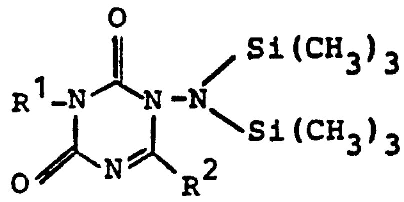

(Ib)

| $R^1$ | $R^2$ |
|---|---|
| $(CH_3)_2CH-$ | $-SCH_3$ |
| $(CH_3)_2CH-$ | $-SC_2H_5$ |
| $(CH_3)_2CH-$ | $-NHCH_3$ |
| $(CH_3)_2CH-$ | $-N(CH_3)_2$ |
| $C_2H_5-CH(CH_3)-$ | $-SCH_3$ |
| $C_2H_5-CH(CH_3)-$ | $-SC_2H_5$ |
| $C_2H_5-CH(CH_3)-$ | $-NHCH_3$ |
| $C_2H_5-CH(CH_3)-$ | $-N(CH_3)_2$ |
| $(CH_3)_2CH-CH_2-$ | $-SCH_3$ |
| $(CH_3)_2CH-CH_2-$ | $-SC_2H_5$ |
| $(CH_3)_2CH-CH_2-$ | $-NHCH_3$ |
| $(CH_3)_2CH-CH_2-$ | $-N(CH_3)_2$ |
| $CF_3-CH_2-$ | $-SCH_3$ |
| $CF_3-CH_2-$ | $-SC_2H_5$ |
| $CF_3-CH_2-$ | $-NHCH_3$ |
| $CF_3-CH_2-$ | $-N(CH_3)_2$ |
| 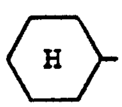 | $-SCH_3$ |
| 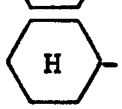 | $-SC_2H_5$ |

Tabelle 2 (Fortsetzung)

| $R^1$ | $R^2$ |
|---|---|
| 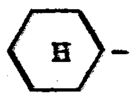 | $-NHCH_3$ |
| 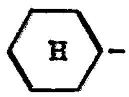 | $-N(CH_3)_2$ |
| 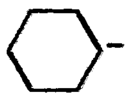 | $-SCH_3$ |
| 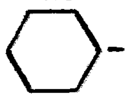 | $-SC_2H_5$ |
| 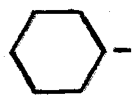 | $-NHCH_3$ |
| 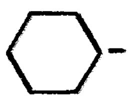 | $-N(CH_3)_2$ |
| 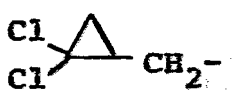 | $-SCH_3$ |
| 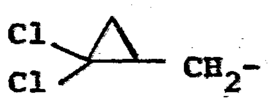 | $-SC_2H_5$ |
| 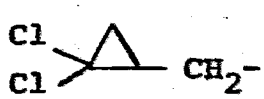 | $-NHCH_3$ |
| 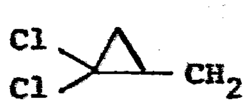 | $-N(CH_3)_2$ |
| 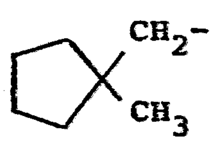 | $-SCH_3$ |

Tabelle 2 (Fortsetzung)

| $R^1$ | $R^2$ |
|---|---|
| 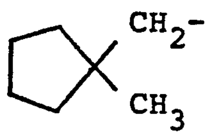 | $-SC_2H_5$ |
| 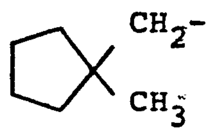 | $-NHCH_3$ |
| 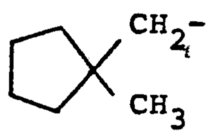 | $-N(CH_3)_2$ |

Die Silylierung der Amino-triazinone (II) wird durchgeführt - wie bereits angegeben -, indem beide Reaktionspartner zusammen erhitzt werden. Vorzugsweise wird das Reaktionsgemisch unter Rückfluß gehalten, da hierbei die bei der Umsetzung entstehende Blausäure destillativ abgetrennt werden kann. Da die Reaktion bei höheren Temperaturen schneller abläuft und Trimethylsilylcyanid bei 117°C siedet, wird entweder unter Druck gearbeitet, und/oder die Reaktionstemperatur wird durch stufenweise bzw. kontinuierliche Zugabe des Trimethylsilylcyanids eingestellt.

Die anwendbaren Reaktionstemperaturen reichen von etwa 100°C bis 220°C, bevorzugt aber sind Temperaturen zwi-

schen 120°C und 200°C; gegen Ende der Reaktion sind Temperaturen von 160-200°C besonders zu empfehlen.

Die erfindungsgemäße Umsetzung kann bei Normaldruck oder bei Überdruck, bevorzugt im Druckbereich von 1 bis 10 bar, durchgeführt werden. Es kann auch zweckmäßig sein, die Reaktion zu Anfang bei Normaldruck und gegen Ende bei Überdruck durchzuführen.

Die erfindungsgemäße Umsetzung wird im allgemeinen ohne Verdünnungsmittel durchgeführt. Es können aber auch die üblichen, in der organischen Chemie gebräuchlichen Lösungsmittel als Verdünnungsmittel zugesetzt werden, soweit sie gegenüber den Reaktanten inert sind und ihr Siedepunkt über 100°C, bevorzugt über 150°C, und besonders bevorzugt über 170°C liegt. Als Beispiele für in Frage kommende Lösungsmittel seien genannt; Toluol, die Xylole, Mesitylen, Chlorbenzol, die Dichlorbenzole, die Trichlorbenzole und Tetrachlorbenzole, Pentachlorbenzol, Hexachlorbenzol, Diphenyl, Diphenylether, Diethylenglykoldiethylether, Diethylenglykoldibutylether, Dimethylformamid, Diethylformamid, Dimethylacetamid, Diethylacetamid, N-Methylpyrrolidon, Sulfolan oder Gemische dieser Lösungsmittel.

In einigen Fällen kann es zweckdienlich sein, eine geringe Menge eines solchen - möglichst polaren - Lösungsmittels zu Beginn der Reaktion zuzusetzen, damit die Reaktion schnell in Gang kommt. Bei besonders schwer

löslichen und hochschmelzenden Ausgangsverbindungen kann eine solche Maßnahme auch notwendig sein. Unter Umständen kann der gleiche Zweck auch dadurch erreicht werden, daß man dem Reaktionsgemisch zu Anfang eine geringe Menge von bereits synthetisiertem Endprodukt zusetzt.

Die erfindungsgemäße Reaktion kann durch Zugabe von sauren oder basischen Stoffen in unterstöchiometrischen Mengen katalysiert werden. Als Beispiele für geeignete Katalysatoren seien genannt: Zinkchlorid, Titantetrachlorid, Aluminiumchlorid, Eisen(III)chlorid und deren Mischungen, sowie Natriumcarbonat, Natriumcyanid, Kupfer-(I)cyanid und deren Mischungen. Wendet man bei der Umsetzung Katalysatoren an, so werden diese in Mengen von 0,05-5 %, bezogen auf die eingesetzte Menge an Amino-triazinon (II), zugesetzt.

Bei der Durchführung des erfindungsgemäßen Verfahrens zur Herstellung der Verbindungen (I) setzt man auf 1 Mol Amino-triazinon (II) mindestens 2 Mol Trimethylsilylcyanid ein. Zweckmäßigerweise wird jedoch ein Überschuß an Trimethylsilylcyanid eingesetzt, bevorzugt 2,1-20 Mol Trimethylsilylcyanid pro Mol Amino-triazinon (II). Das überschüssige Trimethylsilylcyanid kann selbstverständlich zurückgewonnen und erneut eingesetzt werden.

Nach einer besonders bevorzugten Ausführungsform des erfindungsgemäßen Verfahrens wird ein etwa äquivalentes Gemisch der beiden Reaktionspartner unter Rückfluß erhitzt, wobei eine intensive Blausäureabspaltung stattfindet und gleichzeitig die Reaktionstemperatur langsam ansteigt. Wenn die gewünschte Reaktionstemperatur erreicht ist, wird die Reaktion durch Zugabe von weiterem Trimethylsilylcyanid - eventuell unter Druck - zu Ende geführt.

Der Reaktionsverlauf kann gaschromatographisch verfolgt werden. Da in der drucklosen Variante für die vollständige Umsetzung der letzten 10 % erwartungsgemäß eine relativ lange Reaktionszeit nötig ist, kann es zweckmäßig sein, die Reaktion bei ca. 90 % Umsatz abzubrechen. Das nicht umgesetzte Ausgangsprodukt kann, falls gewünscht, abgetrennt werden; man kann aber auch das durch die unvollständige Umsetzung erhaltene Produktgemisch (II)/(I) zur biologischen Anwendung bringen. Hierbei schadet auch die Anwesenheit von Monosilylierungsprodukt nicht, welches sich bei der beschriebenen Umsetzung in geringer Menge bilden kann.

Die Aufarbeitung kann auf verschiedenen Wegen erfolgen. Im allgemeinen werden die Tiefsieder - z.B. überschüssiges Trimethylsilylcyanid - abdestilliert, vorzugsweise gegen Ende im Vakuum. Im allgemeinen kann das dann anfallende Endprodukt oder das Gemisch mit Ausgangsprodukt direkt biologisch angewandt werden. Es kann aber, falls gewünscht, auch weiter gereinigt werden; dies geschieht entweder durch Destillation, bevorzugt unter Verwendung eines Dünnschichtverdampfers, oder durch Kristallisation bzw. Umlösen. Nicht umgesetztes Ausgangsprodukt läßt sich hierbei meist leicht abtrennen, da

die silylierten Endprodukte wesentlich leichter löslich sind als die nichtsilylierten Ausgangsprodukte.

Die gute Löslichkeit der silylierten Endverbindungen (I) in den meisten unpolaren organischen Lösungsmitteln ist auffallend; es ergibt sich damit auch die Möglichkeit andersartiger Formulierungen für die biologische Anwendung.

Es wurde weiterhin gefunden, daß man die Amino-triazinone der allgemeinen Formel (II) durch Umsetzung mit bestimmten Silylamiden auch in die ebenfalls neuen Monotrimethylsilylamino-Derivate der allgemeinen Formel (III)

$$A\text{-}NH\text{-}Si(CH_3)_3 \qquad \text{(III)}$$

worin A die oben bei Formel (I) angegebene Bedeutung hat,

überführen kann, daß diese ebenfalls herbizid stark wirksam sind und außerdem durch Weitersilylierung mit Trimethylsilylcyanid in die Bistrimethylsilylamino-triazinone der Formel (I) umgewandelt werden können.

Gleichfalls Gegenstand der Erfindung sind somit auch die neuen Monotrimethylsilylamino-triazinone der obigen allgemeinen Formel (III), das neue Verfahren zu ihrer Herstellung und ihre Verwendung als Herbizide und als Zwischenprodukte zur Herstellung der Bistrimethylsilylamino-triazinone (I).

Das erfindungsgemäße Verfahren zur Herstellung der Monotrimethylsilylamino-triazinone der obigen allgemeinen Formel (III) ist dadurch gekennzeichnet, daß man Amino-triazinone der allgemeinen Formel (II)

$$A\text{-}NH_2 \qquad \text{(II)}$$

worin A für die Triazinon-Reste der Formeln

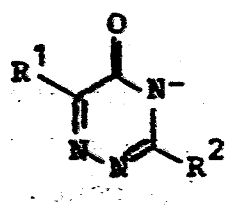

und

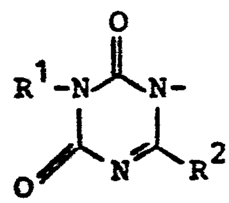

steht, in welchen jeweils

$R^1$ für jeweils gegebenenfalls substituiertes Alkyl, Cycloalkyl oder Aryl steht und

$R^2$ für Alkyl, Alkylthio, Alkylamino oder Dialkylamino steht,

entweder

(a) mit N-Methyl-N-trimethylsilyl-trifluoracetamid der Formel (IV)

$$CF_3\text{-}CO\text{-}\underset{\displaystyle CH_3}{N}\text{-}Si(CH_3)_3 \qquad \text{(IV)}$$

gegebenenfalls in Gegenwart eines inerten Verdünnungsmittel und gegebenenfalls in Gegenwart eines sauren Katalysators bei Temperaturen zwischen 80 und 160°C umsetzt oder

(b) mit N,O-Bistrimethylsilyl-acetamid der Formel (V)

$$CH_3-\overset{OSi(CH_3)_3}{\overset{|}{C}}=N-Si(CH_3)_3 \qquad (V)$$

gegebenenfalls in Gegenwart eines inerten Verdünnungsmittels und gegebenenfalls eines sauren Katalysators bei Temperaturen zwischen 80 und 130°C umsetzt.

In der Formel (III) hat der Rest A die gleichen (durch die Reste $R^1$ und $R^2$ definierten) bevorzugten Bedeutungen wie in Formel (I).

Es muß als überraschend bezeichnet werden, daß es durch Umsetzung mit den genannten silylierten Acetamid-Derivaten gelingt, die Aminotriazinone (II) selektiv in N-Monotrimethylsilyl-Derivate (III) zu überführen: in Analogie zu der obigen Umsetzung mit Trimethylsilylcyanid wäre hierbei eher eine Bissilylierung zu erwarten gewesen.

Die silylierten Acetamid-Derivate der Formeln (IV) und (V) sind bekannt (vgl. z.B. J. Am. Chem. Soc. Vol. <u>88</u>,

S. 3394 ff. (1966) für Verbindung (V); Verbindung (IV) ist eine im Handel erhältliche, käufliche Chemikalie).

Die Umsetzung von (II) mit den Acetamid-Derivaten (IV) bzw. (V) wird bevorzugt bei Rückflußtemperatur des Reaktionsgemisches durchgeführt. Als inerte Verdünnungsmittel sind daher solche Lösungsmittel bevorzugt, deren Siedepunkte in den oben angegebenen Temperaturbereichen (80-160°C bzw. 80-130°C) liegen. Ein besonders bevorzugtes Verdünnungsmittel ist Toluol.

Als Beispiele für saure Katalysatoren seien konz. Schwefelsäure, Trimethylsilylchlorid, Titantetrachlorid und Zinkchlorid genannt. Verwendet man saure Katalysatoren, so werden diese in Mengen von etwa 0,1-5 Gew.-%, bezogen auf die Ausgangsverbindung (II), eingesetzt.

Bei der Durchführung des erfindungsgemäßen Verfahrens zur Herstellung der Verbindungen (III) setzt man auf 1 Mol Amino-triazinon (II) mindestens 1 Mol der silylierten Acetamid-Derivate (IV) bzw. (V) ein; bevorzugt wird jedoch mit einem Überschuß von etwa 10-500 Mol-% gearbeitet. Die silylierten Acetamide können auch als Lösungs- bzw. Verdünnungsmittel eingesetzt werden.

Die Monotrimethylsilylamino-triazinone (III) können in üblicher Weise isoliert und, falls gewünscht, durch Umkristallisation gereinigt werden.

Wie schon angegeben, besitzen die Monotrimethylsilylamino-triazinone (III) ebenso wie die Bistrimethylsilylamino-triazinone (I) starke herbizide Eigenschaften.

Sie können, wie außerdem gefunden wurde, durch Umsetzung mit mindestens 1 Moläquivalent Trimethylsilylcyanid in die Bistrimethylsilylaminotriazinone (I) überführt werden, wobei die übrigen Reaktionsbedingungen die gleichen sind wie bei der oben beschriebenen Reaktion (II) ⟶ (I).

Die erfindungsgemäßen Wirkstoffe der Formeln (I) und (III) können als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Ob die erfindungsgemäßen Stoffe als totale oder selektive Herbizide wirken, hängt im wesentlichen von der angewendeten Menge ab.

Die erfindungsgemäßen Wirkstoffe können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Totalunkrautbekämpfung z.B. auf Industrie- und Gleisanlagen und auf Wegen und Plätzen mit und ohne Baumbewuchs. Ebenso können die Verbindungen zur Unkrautbekämpfung in Dauerkulturen, z.B. Forst-, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen eingesetzt werden.

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate,

wirkstoffimprägnierte Natur- und synthetische Stoffe sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glycol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z. B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können als solche oder in ihren Formulierungen auch in Mischung mit bekannten Herbiziden zur Unkrautbekämpfung Verwendung finden, wobei Fertigformulierungen oder Tankmischungen möglich sind.

Insbesondere ist nochmals hervorzuheben, daß auch Mischungen der Wirkstoffe der Formeln (I), (II) und (III) untereinander - also in Form der Kombinationen (I) + (II), (I) + (III), (II) + (III) sowie (I) + (II) + (III) - mit gutem Erfolg als Herbizide eingesetzt werden können.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Die Wirkstoffe können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffe können sowohl vor als auch nach dem Auflaufen der Pflanzen appliziert werden. Sie können auch vor der Saat in den Boden eingearbeitet werden.

Die angewandte Wirkstoffmenge kann in einem größeren Bereich schwanken. Sie hängt im wesentlichen von der Art des gewünschten Effektes ab. Im allgemeinen liegen die Aufwandmengen zwischen 0,05 und 20 kg Wirkstoff pro Hektar Bodenfläche, vorzugsweise zwischen 0,1 und 10 kg pro ha.

Die Herstellung und die Verwendung der erfindungsgemäßen Wirkstoffe geht aus den nachfolgenden Beispielen hervor.

## Herstellungsbeispiele

### A) Verbindungen der Formel (I)

### Beispiel 1

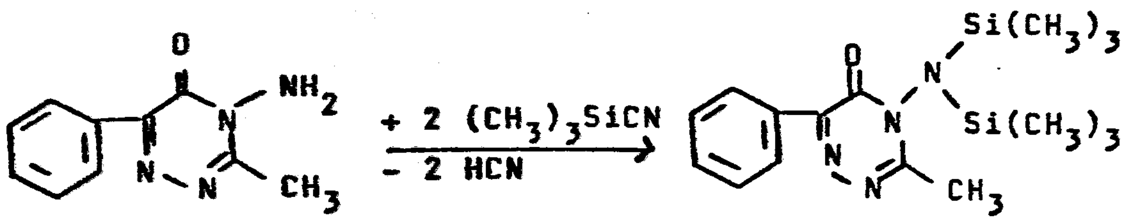


Metamitron
(II-1) (I-1)

a) In einer 2-Hals-Rührkolbenapparatur mit Thermometer und einem auf 60°C gehaltenen Kühler wurden 50 g (0,25 Mol) 4-Amino-3-methyl-6-phenyl-1,2,4-triazin-5(4H)-on (II-1) und 37,5 ml Trimethylsilylcyanid unter langsamen Rühren am Rückfluß erhitzt, bis eine Sumpftemperatur von 175°C erreicht war. Anschließend wurde weiter erhitzt und durch stufenweise Zugabe von insgesamt 47 ml Trimethylsilylcyanid bei ca. 175°C die Reaktion zu Ende geführt. Nach 15,5 Stunden Reaktionszeit wurden bei 100°C Sumpftemperatur die Tiefsieder abdestilliert. Es blieben 85,1 g Rückstand; ein Gaschromatogramm ergab einen Gehalt von 99 % 4-(Bis-trimethylsilyl-amino)-3-methyl-6-phenyl-1,2,4-triazin-5(4H)-on (I-1) (GC-MS-Kopplung). Bei 0,66 mbar und 170-175°C

wurde destilliert; es blieben 77,5 g (≙ 90 % d.Th.) eines hellbraunen Öls zurück, welches langsam durchkristallisierte.

b) Es wurde wie in Beispiel 1 gearbeitet.

Nach 7 3/4 Stunden Reaktionszeit waren bereits 73 % der Ausgangsverbindung in das Bis-silylderivat (I-1) umgewandelt. (Enthielt der Ansatz 0,3 g Zinkchlorid, so konnte zu diesem Zeitpunkt bereits eine Bissilylierung von 82 % festgestellt werden). Es wurde dann mit Trimethylsilylcyanid auf 200 ml Gesamtvolumen aufgefüllt und im Autoklaven 4 Stunden auf 170°C erhitzt, wobei sich ein maximaler Druck von 2 bar einstellte. Anschließend wurde destillativ aufgearbeitet und 66,7 g eines Produktes erhalten, welches nach gaschromatographischer Untersuchung folgende Zusammensetzung aufwies:

3,8 % Ausgangsverbindung (II-1),
4,3 % N-Monosilylderivat (III-1),
90,5 % N,N-Bissilylderivat (I-1).

c) Entsprechend Beispiel 1 wurden 2020 g (10,1 Mol) 4-Amino-3-methyl-6-phenyl-1,2,4-triazin-5(4H)-on (II-1) umgesetzt, bis ein gaschromatographischer Gehalt an bissilyliertem Produkt (I-1) von 86 % erreicht war. Die Tiefsieder wurden abdestilliert und der Rückstand über einen Dünnschichtverdampfer (205°C Wandtemperatur/0,13 mbar) gereinigt.

Eine kleine Menge wurde konzentriert aus Waschbenzin umkristallisiert, wobei der größte Teil des noch vorhandenen Ausgangsproduktes (II-1) unlöslich blieb und abfiltriert werden konnte. Das umkristallisierte Produkt enthielt nur noch 5 % unsilylierte Ausgangsverbindung.

d)

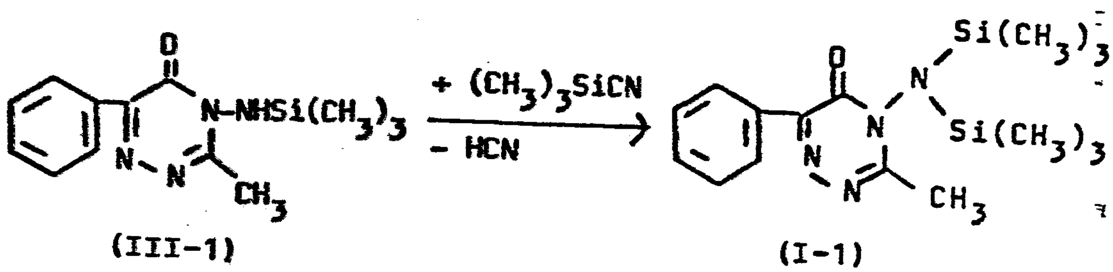


(III-1) (I-1)

Zu 10 g (0,04 Mol) 4-Trimethylsilylamino-3-methyl-6-phenyl-1,2,4-triazin-5(4H)-on (III-1) (vgl. Beispiel 4) wurde bei 170-180°C Trimethylsilylcyanid so zugetropft, daß die Reaktionstemperatur aufrecht erhalten wurde.

Nach 6 Stunden Reaktionszeit wurde im Wasserstrahlvakuum eingeengt und der Rückstand (11,7 g) gaschromatographisch untersucht.

Er bestand zu 93 % aus 4-(Bis-trimethylsilylamino)-3-methyl-6-phenyl-1,2,4-triazin-5(4H)-on (I-1); Ausbeute: 85 % d.Th.

Beispiel 1a

Metamitron (II-1) kann auch durch Umsetzung mit überschüssigem N,O-Bis-trimethylsilylacetamid in das Bissilylderivat (I-1) überführt werden:

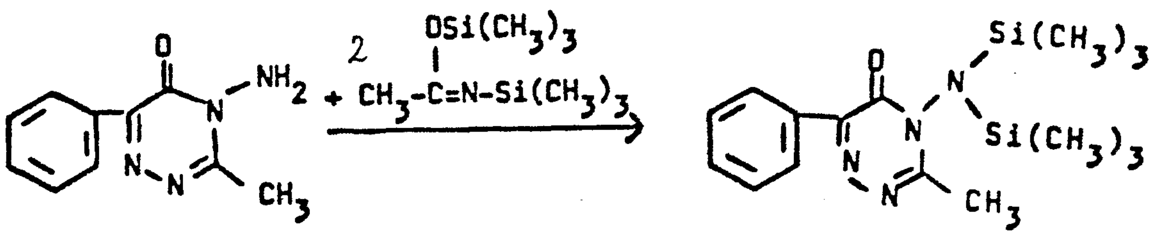

Metamitron
(II-1)

(I-1)

10,1 g (0,05 Mol) 4-Amino-3-methyl-6-phenyl-1,2,4-triazin-5(4H)-on (II-1) und 37,4 g (0,15 Mol) N,O-Bis-trimethylsilylacetamid (81%ige Ware) wurden mit 0,3 ml Trimethylsilylchlorid 14 Stunden unter Rückfluß erhitzt (ca. 145°C). Anschließend wurde im Hochvakuum bei 95°C Badtemperatur eingeeingt. Es blieben 17,2 g öliger, langsam kristallisierender Rückstand zurück, welcher nach gaschromatographischer Untersuchung zu 94,4 % aus 4-Bis-trimethylsilylamino-3-methyl-6-phenyl-1,2,4-triazin-5-(4H)-on (I-1) und zu 2,4 % aus 4-Trimethylsilylamino-3-methyl-6-phenyl-1,2,4-triazin-5(4H)-on (III-1) bestand.

Beispiel 2

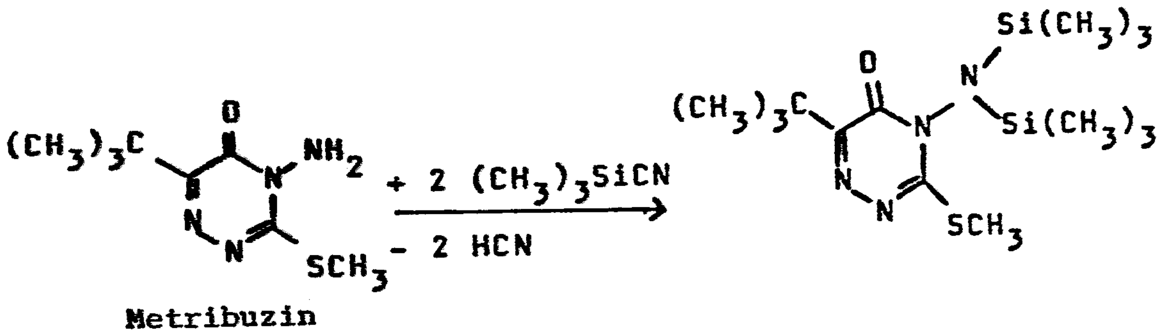


Metribuzin
(II-2)

(I-2)

21,4 g (0,1 Mol) 4-Amino-6-tert.-butyl-3-methylthio-1,2,4-triazin-5(4H)-on (II-2) (95 %ige Ware) und 12,5 ml Trimethylsilylcyanid wurden am Rückfluß erhitzt, wobei über einen auf 60°C beheizten Kühler entstehende Blausäure abgetrennt wurde. Nachdem eine Sumpftemperatur von 205°C erreicht war, wurde 9 Stunden weitergerührt, dann mit 8,2 g Zinkchlorid versetzt und weitere 9 Stunden unter Zugabe von Trimethylsilylcyanid die Reaktionstemperatur zwischen 140 und 160°C gehalten.

Nach Destillation im Hochvakuum (0,32 - 0,45 mbar) bei 125 - 140°C blieben 23 g gelbes Öl zurück, welches nach spektroskopischer Untersuchung zu 91 % aus 4-(Bis-trimethylsilyl-amino)-6-tert.-butyl-3-methylthio-1,2,4-triazin-5-(4H)-on (I-2) bestand (≙ 58 % d.Th.).

Beispiel 3

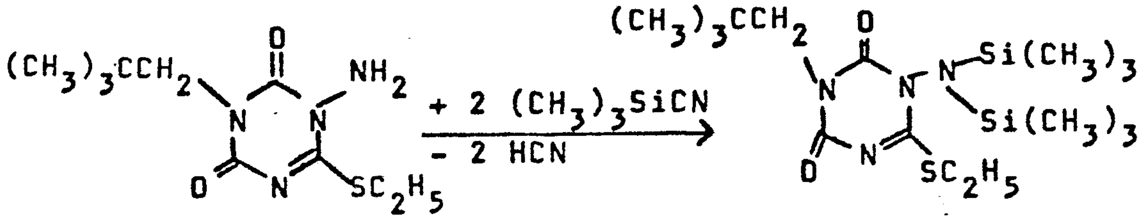


Ametridione
(II-3)

(I-3)

25,8 g (0,1 Mol) 1-Amino-6-ethylthio-3-neopentyl-1,3,5-triazin-2,4(1H, 3H)-dion (II-3) und 3 ml N-Methylpyrrolidon wurden mit 0,2 g Zinkchlorid versetzt und bei ca. 170°C aufgeschmolzen. Anschließend wurde bei ca. 170°C mit Trimethylsilylcyanid stufenweise versetzt, so daß die Reaktionstemperatur aufrecht erhalten wurde. Nach 8 Stunden Reaktionszeit wurde destillativ aufgearbeitet. Es blieben 18,3 g eines gelben Öls (Kp.: 175-185°C/ 0,266 mbar), welches langsam erstarrte. Es enthielt nach gaschromatographischer Untersuchung 83,5 % 1-(Bis-trimethylsilyl-amino)-6-ethylthio-3-neopentyl-1,3,5-triazin-2,4(1H, 3H)-dion (I-3) (≙ 89 % d.Th.).

B) Verbindungen der Formel (III)

Beispiel 4

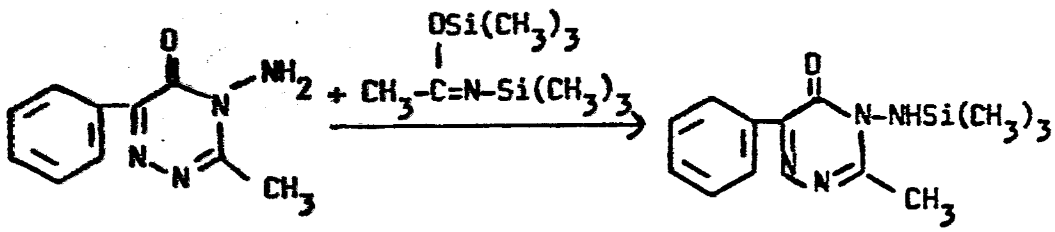

Metamitron
(II-1)

(III-1)

30,3 g (0,15 Mol) 4-Amino-3-methyl-6-phenyl-1,2,4-triazin-5(4H)-on (II-1) wurden in 150 ml Toluol suspendiert und mit 128 g (0,45 Mol) N,O-Bis-trimethylsilyl-acetamid (81 %ige Ware) versetzt. Anschließend wurde 4 Stunden am Rückfluß erhitzt (ca. 120°C), wobei eine homogene Lösung entstand. Es wurde abgekühlt, der ausgefallene Niederschlag abgesaugt und aus Waschbenzin umkristallisiert. Man erhielt 25 g 4-Trimethylsilylamino-3-methyl-6-phenyl-1,2,4-triazin-5(4H)-on (III-1) vom Schmelzpunkt 129-132°C (61 % d. Th.).

Durch Aufarbeitung der Mutterlaugen konnte weiteres Produkt isoliert werden.

Beim Destillieren der Monosilylverbindung (III-1) (Siedepunkt 180°C-190°C/0,13 mbar) findet eine teilweise Disproportionierung statt (Schmelzpunkt des Destillats: 115-120°C). Nach einer gaschromatographischen Untersuchung hat das Destillat folgende Zusammensetzung:

60 % Monosilylverbindung (III-1),
24,3 % Metamitron (II-1)
13 % Bissilylverbindung (I-1),
Rest: Unbekannte Nebenprodukte.

Beispiel 5

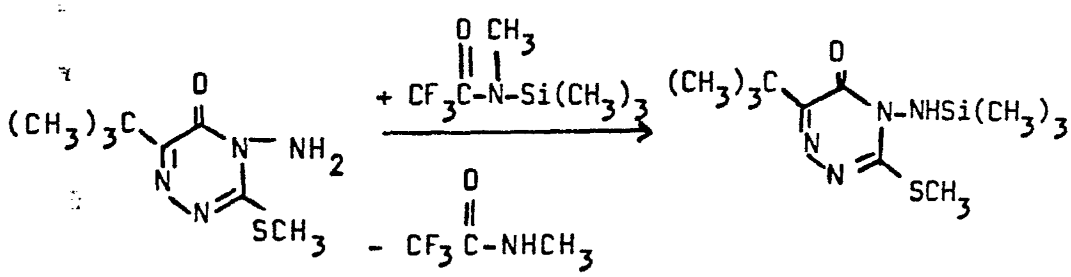

Metribuzin
(II-2)

(III-2)

5 g (0,023 Mol) 4-Amino-6-tert.-butyl-3-methylthio-1,2,4-triazin-5(4H)-on (II-2) und 10 ml (0,054 Mol) N-Methyl-N-trimethylsilyl-trifluoracetamid, welches 2 % Trimethylsilylchlorid enthielt, wurden 24 Stunden am Rückfluß erhitzt. Es wurde abgekühlt und abgesaugt. Man erhielt 3,6 g 4-Trimethylsilylamino-6-tert.-butyl-3-methylthio-1,2,4-triazin-5(4H)-on (III-2), Schmelzpunkt 87-88°C.

Beispiel 6

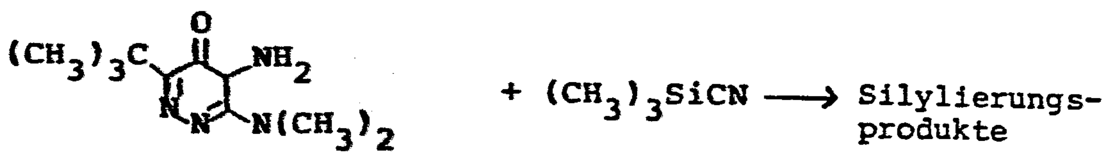


(II-4)

52,3 g (0,25 Mol) 4-Amino-6-tert.-butyl-3-dimethylamino-1,2,4-triazin-5-(4H)-on (II-4) (bekannt aus DE-OS 29 08 963, EP-A-0015 452 bzw. US-PS 4 447 258) wurden bei 175°C mit Trimethylsilylcyanid 18 Stunden unter Rückfluß erhitzt; durch laufende Zugabe von Trimethylsilylcyanid wurde die Reaktionstemperatur aufrecht erhalten.

Anschließend wurde destilliert. Dabei fielen 65 g einer Fraktion des Siedebereiches 100-130°C/0,1 mbar an, welche nach GC/MS-Kopplung folgende Zusammensetzung hatte:

7 % 4-Amino-6-tert.-butyl-3-dimethylamino-1,2,4-triazin-5(4H)-on (II-4),

50 % 4-Trimethylsilylamino-6-tert.-butyl-3-dimethylamino-1,2,4-triazin-5(4H)-on (III-4),

39 % 4-(Bis-trimethylsilyl-amino)-6-tert.-butyl-3-dimethylamino-1,2,4-triazin-5(4H)-on (I-4).

Beispiel A

Pre-emergence-Test

Lösungsmittel: 5 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Samen der Testpflanzen werden in normalen Boden ausgesät und nach 24 Stunden mit der Wirkstoffzubereitung begossen. Dabei hält man die Wassermenge pro Flächeneinheit zweckmäßigerweise konstant. Die Wirkstoffkonzentration in der Zubereitung spielt keine Rolle, entscheidend ist nur die Aufwandmenge des Wirkstoffs pro Flächeneinheit. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

Eine deutliche Überlegenheit gegenüber dem Stand der Technik zeigen in diesem Test z.B. die Verbindungen der folgenden Herstellungsbeispiele: Beispiel 1, Wirkstoff (I-1).

Patentansprüche

1. Bistrimethylsilylamino-triazinone der allgemeinen Formel (I)

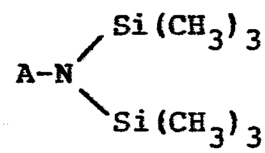

(I)

worin A für die Triazinon-Reste der Formeln

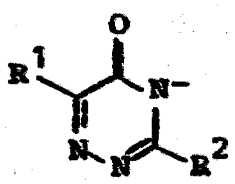

und

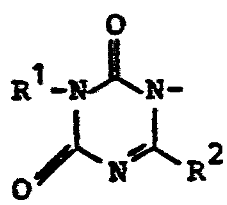

steht, in welchen jeweils

$R^1$ für jeweils gegebenenfalls substituiertes Alkyl, Cycloalkyl oder Aryl steht und

$R^2$ für Alkyl, Alkylthio, Alkylamino oder Dialkylamino steht.

2. Bistrimethylsilylamino-triazinone der allgemeinen Formel (I) gemäß Anspruch 1, dadurch gekennzeichnet, daß

$R^1$ für jeweils gegebenenfalls durch Halogen substituiertes Alkyl mit 1-8 C-Atomen, Cycloalkyl mit 3-8 C-Atomen oder Phenyl steht und

$R^2$ für jeweils durch Halogen substituiertes Alkyl mit 1-2 C-Atomen, Alkylthio mit 1-2 C-Atomen, Alkylamino mit 1-2 C-Atomen oder Dialkylamino mit 1-2 C-Atomen in jeder Alkylgruppe steht.

3. Bistrimethylsilylamino-triazinone der allgemeinen Formel (I) gemäß Anspruch 1, dadurch gekennzeichnet, daß

$R^1$ für Methyl, Ethyl, Propyl, iso-Propyl, sec.-Butyl, iso-Butyl, tert.-Butyl, Neopentyl, Cyclopropyl, 1-Methylcyclopropyl, Cyclopentyl und Cyclohexyl;
Phenyl, 2-Chlorphenyl, 3-Chlorphenyl, 4-Chlorphenyl, 2-Fluorphenyl, 3-Fluorphenyl oder 4-Fluorphenyl steht und

$R^2$ für Methyl, Ethyl, iso-Propyl, Chlormethyl, Dichlormethyl, Trichlormethyl, Fluormethyl, Difluormethyl, Trifluormethyl, 1-Fluorethyl, Pentafluorethyl, Methylthio, Trichlormethylthio, Trifluormethylthio, Ethylthio, Methylamino, Dimethylamino, Ethylamino oder Diethylamino steht.

4. 4-(Bis-trimethylsilylamino)-3-methyl-6-phenyl-1,2,4-triazin-5(4H)-on der Formel

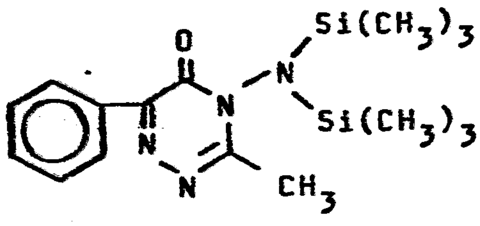

(I-1)

gemäß Anspruch 1.

5. 4-(Bis-trimethylsilyl-amino)-6-tert.-butyl-3-methylthio-1,2,4-triazin-5-(4H)-on der Formel

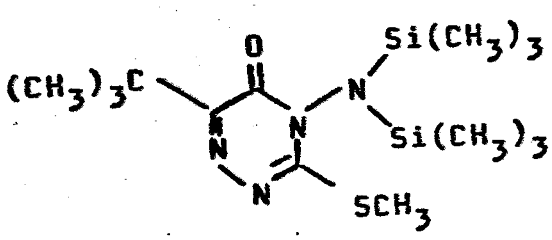

(I-2)

gemäß Anspruch 1.

6. 1-(Bis-trimethylsilyl-amino)-6-ethylthio-3-neopentyl-1,3,5-triazin-2,4-(1H, 3H)-dion der Formel

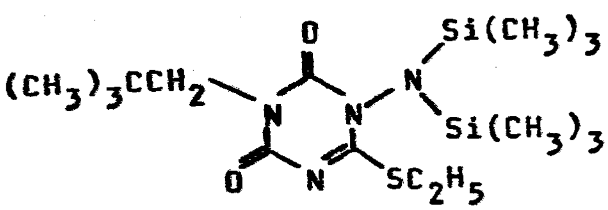

(I-3)

gemäß Anspruch 1.

7. Verfahren zur Herstellung von Bistrimethylsilylaminotriazinonen der allgemeinen Formel (I) gemäß

Anspruch 1, dadurch gekennzeichnet, daß man Aminotriazinone der allgemeinen Formel (II)

$$A\text{-}NH_2 \qquad (II)$$

worin A die in Anspruch 1 angegebene Bedeutung hat,

mit Trimethylsilylcyanid $[(CH_3)_3\text{-Si-CN}]$ bei Temperaturen zwischen 100 und 220°C, gegebenenfalls in Gegenwart eines sauren oder basischen Katalysators, gegebenenfalls in Gegenwart eines Verdünnungsmittels und gegebenenfalls unter Druck, umsetzt.

8. Monotrimethylsilylamino-triazinone der allgemeinen Formel (III)

$$A\text{-}NH\text{-}Si(CH_3)_3 \qquad (III)$$

worin A für die Triazinon-Reste der Formeln

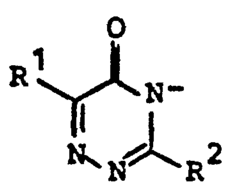

und

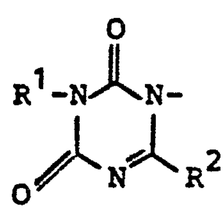

steht, in welchen jeweils

$R^1$ für jeweils gegebenenfalls substituiertes Alkyl, Cycloalkyl oder Aryl steht und

$R^2$ für Alkyl, Alkylthio, Alkylamino oder Dialkylamino steht.

9. 4-Trimethylsilylamino-3-methyl-6-phenyl-1,2,4-triazin-5(4H)-on der Formel

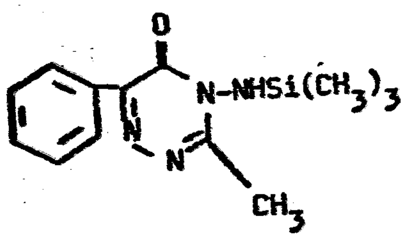

(III-1)

10. 4-Trimethylsilylamino-6-tert.-butyl-3-methylthio-1,2,4-triazin-5(4H)-on der Formel

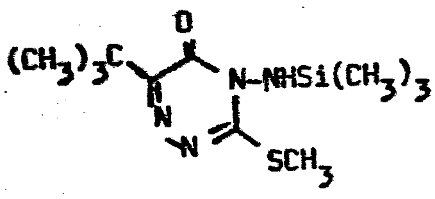

(III-2)

11. Verfahren zur Herstellung von Monotrimethylsilylaminotriazinonen der allgemeinen Formel (III) gemäß Anspruch 8, dadurch gekennzeichnet, daß man Aminotriazinone der allgemeinen Formel (II),

$$A\text{-}NH_2 \qquad (II)$$

worin A die in Anspruch 8 angegebene Bedeutung hat, entweder

(a) mit N-Methyl-N-trimethylsilyl-trifluoracetamid der Formel (IV)

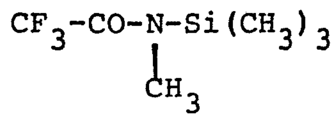

(IV)

gegebenenfalls in Gegenwart eines inerten Verdünnungsmittels und gegebenenfalls in Gegenwart eines sauren Katalysators bei Temperaturen zwischen 80 und 160°C umsetzt oder

(b) mit N,O-Bistrimethylsilyl-acetamid der Formel (V)

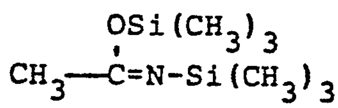

(V)

gegebenenfalls in Gegenwart eines inerten Verdünnungsmittels und gegebenenfalls in Gegenwart eines sauren Katalysators bei Temperaturen zwischen 80 und 130°C umsetzt.

12. Verwendung von Monotrimethylsilylamino-triazinonen der Formel (III) gemäß Anspruch 8 als Zwischenprodukte für die Herstellung von Bistrimethylsilylamino-triazinonen der Formel (I) gemäß Anspruch 1.

13. Herbizide Mittel, gekennzeichnet durch einen Gehalt an mindestens einem Bistrimethylsilylaminotriazinon der Formel (I) gemäß Anspruch 1 und/oder einem Monotrimethylsilylamino-triazinon der Formel (III) gemäß Anspruch 8.

14. Herbizide Mittel gemäß Anspruch 13, gekennzeichnet durch einen zusätzlichen Gehalt an einem Amino-triazinon der Formel (II) in Anspruch 7.

15. Herbizides Mittel gemäß Anspruch 14, gekennzeichnet durch einen Gehalt an 4-Amino-3-methyl-6-phenyl-1,2,4-triazin-5(4H)-dion (II-1) in Kombination mit 4-(Bis-trimethylsilyl-amino)-3-methyl-6-phenyl-1,2,4-triazin-5(4H)-on (I-1) und/oder 4-Trimethylsilylamino-3-methyl-6-phenyl-1,2,4-triazin-5(4H)-on (III-1).

16. Verwendung von Mono- und Bistrimethylsilylamino-triazinonen der Formeln (III) gemäß Anspruch 8 bzw. (I) gemäß Anspruch 1 zur Bekämpfung von unerwünschtem Pflanzenwachstum.

17. Verfahren zur Herstellung von herbiziden Mitteln, dadurch gekennzeichnet, daß man Mono- und/oder Bistrimethylsilylamino-triazinone der Formeln (III) gemäß Anspruch 8 bzw. (I) gemäß Anspruch 1 mit Streckmitteln und/oder oberflächenaktiven Mitteln vermischt.

Europäisches Patentamt

**0164634**

# EUROPÄISCHER RECHERCHENBERICHT

Nummer der Anmeldung

EP 85 10 6508

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 89, Nr. 13, 25. September 1978, Columbus, Ohio, USA; N. WIBERG et al. "Derivatives of hydrazine, VIII. bis(Trimethylsilyl)amino isocyanate and isothiocyanate", Seiten 944-945, Zusammenfassungsnr. 109705x& Z. Naturforsch., B: Anorg. Chem. Org. Chem., Band 33B, Heft 6, 1978, Seiten 575-582 in Verbindung mit Formelregister, 10. Collective vol., Seite 8412f, Spalte 2, Zeile 12 --- | 1 | C 07 F 7/10<br>A 01 N 55/00 |
| A | DD-A- 155 132 (BASF) ----- | 12-17 | RECHERCHIERTE SACHGEBIETE (Int. Cl.4)<br>C 07 F 7/10<br>A 01 N 55/00 |

Der vorliegende Recherchenbericht wurde für alle Patentansprüche erstellt.

| Recherchenort | Abschlußdatum der Recherche | Prüfer |
|---|---|---|
| BERLIN | 02-09-1985 | KAPTEYN H G |

KATEGORIE DER GENANNTEN DOKUMENTEN

- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze
- E : älteres Patentdokument, das jedoch erst am oder nach dem Anmeldedatum veröffentlicht worden ist
- D : in der Anmeldung angeführtes Dokument
- L : aus andern Gründen angeführtes Dokument
- & : Mitglied der gleichen Patentfamilie, übereinstimmendes Dokument

EPA Form 1503 03 82